Europäisches Patentamt

European Patent Office

Office européen des brevets

(19)

(11) EP 0 584 005 B1

(12) FASCICULE DE BREVET EUROPEEN

(45) Date de publication et mention
de la délivrance du brevet:
17.12.1997 Bulletin 1997/51

(51) Int Cl.6: G01N 21/77, G01N 21/45

(21) Numéro de dépôt: 93402021.5

(22) Date de dépôt: 06.08.1993

(54) **Capteur en optique intégrée, notamment pour substances chimiques**

Integrierter optischer Sensor, insbesondere für chemische Substanzen

Integrated optical sensor, especially for chemical substances

(84) Etats contractants désignés:
CH DE GB IT LI NL

(30) Priorité: 10.08.1992 FR 9209869

(43) Date de publication de la demande:
23.02.1994 Bulletin 1994/08

(73) Titulaire: COMMISSARIAT A L'ENERGIE
ATOMIQUE
75015 Paris Cédex 15 (FR)

(72) Inventeur: Valette, Serge
F-38100 Grenoble (FR)

(74) Mandataire: Dubois-Chabert, Guy et al
c/o BREVATOME
25, rue de Ponthieu
75008 Paris (FR)

(56) Documents cités:
EP-A- 0 061 884          WO-A-92/05429
GB-A- 2 228 082

• APPLIED PHYSICS LETTERS vol. 55, no. 23, 4
Décembre 1989, New York, US, pp 2389-2391;
SHANI ET AL.: 'EFFICIENT COUPLING OF A
SEMICONDUCTOR LASER TO AN OPTICAL
FIBER BY MEANS OF A TAPERED WAVEGUIDE
ON SILICON'

## Description

<u>Domaine technique</u>

La présente invention concerne un capteur en optique intégrée, notamment pour substances chimiques. Un capteur conforme au préambule de la revendication 1 est décrit dans le document WO92/05429.

<u>Etat de la technique antérieure</u>

Pour détecter la présence de substances chimiques, on peut utiliser des capteurs optiques mettant en oeuvre deux types de phénomènes :

- une modification d'indice de réfraction,
- une modification d'absorption de la lumière.

Ces modifications peuvent soit mettre directement en jeu la substance à mesurer (gaz ou liquide), soit faire appel à un matériau relais qui adsorbe ou absorbe sélectivement la substance à mesurer, ce qui modifie ses caractéristiques optiques.

Malheureusement, la plupart du temps, ces modifications sont très faibles, mais elles peuvent être compensées en optique par une grande longueur d'interaction. En effet, la variation d'indice induite par la substance à mesurer $\Delta n$ produit une variation de phase $\Delta\phi = 2\pi/\lambda\Delta\ nL$. Si la variation de phase minimum détectable dans un schéma interférométrique est $\delta\phi$, la variation minimale $\delta n$ détectable est $\delta n = \lambda\delta\phi/2\ \pi\ L$. Si L est très grand, $\delta n$ peut être très faible.

De même, l'absorption $\Delta\alpha$ influence directement le signal d'intensité lumineuse Is en sortie. Si la variation relative minimum détectable est $\delta I/Is$, (Is étant l'intensité lumineuse du système non perturbé), celle-ci est proportionnelle à $\Delta\alpha L$. La variation minimale d'absorption détectable est donc elle aussi inversement proportionnelle à L.

Une demande de brevet français FR-A-88 14433, déposée le 4 novembre 1988, décrit un dispositif optique intégré servant à mesurer l'indice de réfraction d'un fluide comprenant (a) un guide de lumière d'un indice effectif $n_1$ du mode guidé, formé sur un substrat et comportant une couche guidante destinée à véhiculer des faisceaux lumineux, intercalée entre une couche inférieure et une couche supérieure ayant des indices de réfraction inférieurs à celui de la couche guidante, (b) une zone de mesure d'interaction du guide de lumière destinée à être au contact du fluide, la couche supérieure au niveau de la zone de mesure présentant une épaisseur inférieure à la distance de pénétration de l'onde évanescente du faisceau lumineux guidé et en dehors de cette zone d'interaction une épaisseur supérieure à ladite distance de pénétration de cette même onde évanescente, et (c) un système optique du type interféromètre, formé au moins en partie dans le guide de lumière et comportant un circuit optique de référence et un circuit optique de mesure incluant la zone de mesure, pour mesurer le déphasage introduit par un changement d'indice effectif $n_2$ du mode guidé dû au fluide.

Ce dispositif utilise le fait que, en optique intégrée, l'indice effectif d'un mode guidé dépend de tous les paramètres de la structure du guide et en particulier de l'épaisseur et des indices de réfraction des différentes couches constituant ce guide. Aussi, la modification de l'un de ces paramètres, et en particulier de l'indice de réfraction de l'une de ces couches, modifie l'indice effectif du mode guidé considéré et introduit donc localement une modification de phase de la lumière qui peut être détectée par interférométrie.

Dans les dispositifs en optique classique de l'art connu, la nécessité de mettre en oeuvre une grande longueur d'interaction entraîne en contrepartie un encombrement important. En optique guidée, ces deux contraintes peuvent être conciliées notamment par l'utilisation de fibres optiques.

Cependant il est très difficile alors d'avoir une référence capable d'affranchir la mesure effectuée des perturbations que peuvent causer différents effets parasites, par exemple dus à des variations de température, de pression, ou de l'intensité lumineuse d'entrée.

L'invention a pour objet de présenter une structure de guides d'ondes permettant de s'affranchir de ces effets, dans le cas où l'on veut détecter la présence d'un fluide, gaz ou liquide, par exemple une concentration de méthane inférieure à la limite d'explosivité (1%) ; détecter la modification de la concentration d'un soluté dans un liquide, par exemple les variations de pH au cours du temps ou dans le domaine biomédical une variation de concentration antigènes-anticorps.

<u>Exposé de l'invention</u>

La présente invention propose un capteur en optique intégrée, notamment pour substances chimiques, comprenant deux guides d'ondes intégrées sur un substrat, recevant le signal d'une source de lumière au travers d'un premier composant optique permettant de séparer en deux parties l'intensité lumineuse émise par la source, et envoyant ces signaux de sortie sur au moins un détecteur le premier des deux guides étant un guide de référence isolé de l'influence de la substance à mesurer, et le second étant un guide de mesure affecté par la substance à mesurer, caractérisé en ce que les guides d'onde forment une double spirale entrelacée et en ce que les signaux de sortie sont envoyés sur le(s) détecteur(s) au travers d'un second composant optique.

Avantageusement les entrées et les sorties de la spirale sont situées sur le même côté du substrat, une telle réalisation permettant d'obtenir une structure plus compacte et plus pratique d'utilisation.

Avantageusement le second guide est affecté par la substance à mesurer soit directement, soit par l'intermédiaire d'un matériau relais. Un tel capteur selon l'invention peut être utilisé pour réaliser soit :

- une mesure directe d'intensité (mesure d'absorption sélective),
- une mesure interférométrique (mesure d'indice réel) avec ou non mesure simultanée d'absorption.

Avantageusement dans une première variante, le second composant optique est un bicoupleur ou préférentiellement un tricoupleur permettant de faire interférer les signaux de sortie des guides, de manière à mesurer les variations de phases induites entre le premier guide de référence et le second guide de mesure, ce tricoupleur comprenant un guide central associé aux guides de mesure et de référence et disposé entre lesdits guides.

Avantageusement dans une seconde variante, le second composant optique permet de relier les deux guides et deux détecteurs pour détecter les intensités lumineuses en sortie de ces guides.

Avantageusement dans les parties d'entrée et de sortie de la spirale les deux guides ont une structure identique à celle du guide de référence. En dehors de ces parties, le guide de mesure a une structure différente pour permettre la mesure. Les liaisons entre les parties d'entrée et de sortie du guide et la partie centrale de mesure se font avantageusement par une transition adiabatique.

Avantageusement le franchissement des guides de la spirale par l'une des deux extrémités de ceux-ci est réalisé, en optique intégrée, par croisement direct des guides dans le plan de la spirale elle-même, les angles de croisement des différents guides étant de préférence supérieurs à 10°.

Avantageusement les guides d'ondes lumineuses sont réalisés dans l'une des structures $Si/SiO_2/Si_3N_4/SiO_2$ et $Si/SiO_2/SiO_2$ haut indice/$SiO_2$.

L'intérêt d'une telle structure en spirale réside dans le fait que l'on parvient dans un volume réduit à augmenter la sensibilité du capteur de façon importante en jouant sur le nombre de spires.

De plus, le fait d'utiliser deux guides proches l'un de l'autre dans une spirale entrelacée permet d'obtenir deux guides ayant des réactions similaires à un environnement parasite.

## Brève description des dessins

- Les figures 1 et 2 illustrent deux variantes du dispositif de l'invention,
- les figures 3 à 16 illustrent diverses réalisations des guides formant la spirale du capteur de l'invention.

## Exposé détaillé de modes de réalisation

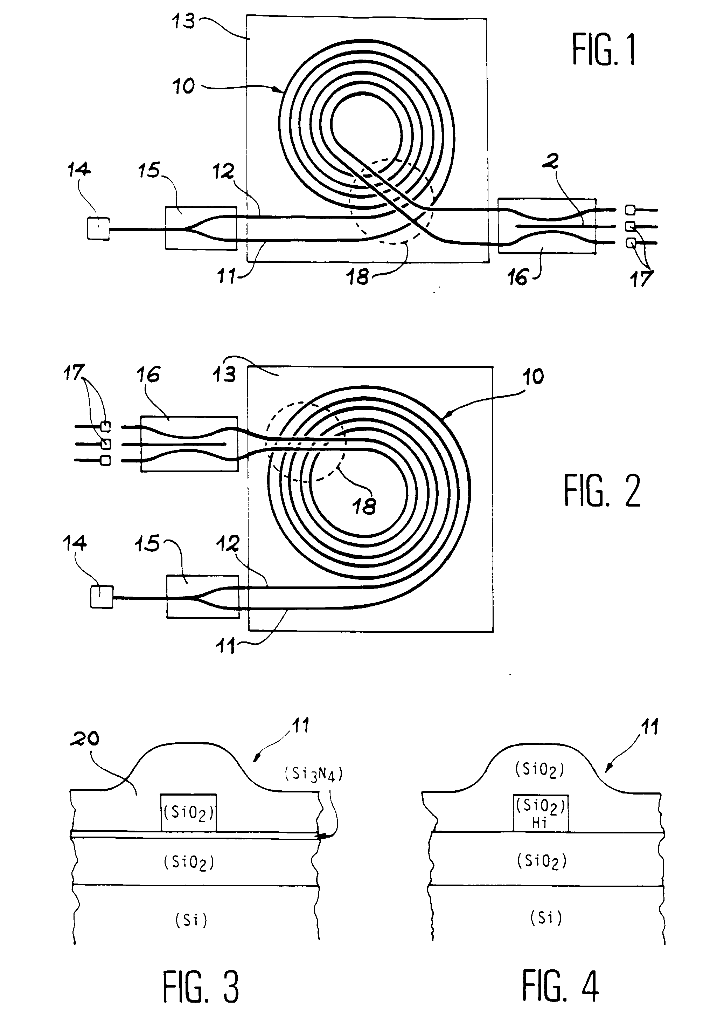

Comme représenté sur les figures 1 et 2 le capteur de l'invention comprend une double spirale 10 entrelacée de guides d'ondes 11 et 12, intégrée sur un substrat 13.

Cette double spirale 10 reçoit le signal d'une source de lumière 14 au travers d'un premier composant optique 15 qui peut être un bicoupleur, ou une jonction Y, permettant de séparer l'intensité lumineuse émise par la source 14 en deux parties égales.

En sortie de la double spirale 10 les signaux de sortie des deux guides 11 et 12, recombinés par un second composant optique 16, sont envoyés sur un ou plusieurs détecteurs 17.

Les composants 15 et 16 sont avantageusement réalisés de façon intégrée sur le même substrat que la double spirale 10.

Le croisement 18 des guides 11 et 12 se fait par des jonctions X dont l'angle de croisement est de préférence supérieur à 10° pour éviter qu'une partie de la lumière, lorsque l'angle est très faible, puisse s'égarer dans une direction qui n'est pas celle souhaitée et provoquer ainsi des parasites éventuellement gênants pour l'exploitation des résultats par le ou les détecteurs.

La réalisation de la figure 2, dans laquelle les entrées et sorties de la spirale 10 sont situées sur le même côté du substrat 13, permet d'obtenir une structure plus compacte et plus pratique d'utilisation. Ainsi, dans le domaine biomédical par exemple, si on utilise des capteurs jetables le branchement et le débranchement de connecteurs aux entrées et aux sorties de la spirale 10 sont rendus plus aisés.

Dans la double spirale représentée aux figures 1 et 2, le premier guide 11, est un guide de référence qui est complètement isolé de l'influence de la substance à mesurer. Le second guide 12 est affecté par la substance à mesurer soit directement, soit par l'intermédiaire d'un matériau relais. Ce second guide 12 est donc l'élément sensible du capteur.

Le capteur de l'invention peut être utilisé dans deux types de mesures :

A/ Pour détecter les variations de la partie réelle de l'indice effectif du mode guidé induite principalement par une modification de l'indice réel de réfraction apportée par la substance à détecter, soit par celle du matériau relais :

Dans ce cas, on mesure les variations de phase produites entre le premier guide 11 de référence et le second guide 12 de mesure. Il faut donc faire interférer les signaux de sortie des guides 11 et 12. Le composant 16 est alors un bicoupleur ou plus favorablement un tricoupleur.

Comme représenté sur les figures 1 et 2, un tel tricoupleur 16, ou coupleur trois voies, comporte un guide central 2 couplé aux guides 11 et 12 et disposé entre ces derniers.

Dans la zone de couplage, les guides 11 et 12 sont adjacents au guide 2 et la distance séparant le guide 2 respectivement des guides 11 et 12 est comprise entre 1 et 10 $\mu$m et de préférence entre 1 et 5 $\mu$m.

Pour une partition identique de l'intensité lumineuse, entre le guide 2 et le guide 11 d'une part, et entre le guide 2 et le guide 12 d'autre part, on utilise une zone de couplage allant de 1 à 15 mm typiquement.

Au niveau de la face de détection correspondant à la sortie des guides 11, 2 et 12, ces derniers sont très écartés les uns des autres, d'une distance au moins supérieure à 10 µm et typiquement de l'ordre de 20 µm à 50 µm pour éviter tout couplage.

Le guide 2 est réalisé en même temps et de la même façon que les guides 11 et 12.

Associés à ce coupleur trois voies 16, on utilise trois détecteurs 17, disposés respectivement en regard des sorties des guides 11, 2 et 12.

Ces détecteurs 17 produisent un signal électrique respectivement d'intensité la, Ib et Ic, représentatif du signal d'interférence formé en aval de la face de détection et satisfaisant aux équations données ci-après :

$$IA = A + B\cos\psi + C\sin\psi$$

$$Ib = 1 - (Ia+Ic)$$

$$Ic = A + B\cos\psi - C\sin\psi$$

Dans ces équations, A, B et C sont des coefficients de partage de la lumière qui dépend de la géométrie du coupleur et $\psi$ le déphasage entre le faisceau de mesure et le faisceau de référence.

En effectuant la-Ic, on obtient $2C\sin\psi$ alors que la+Ic donne $2A+2B\cos\psi$ et $Ib=1-(2A+2B\cos\psi)$.

On obtient ainsi deux systèmes de franges en quadrature de phase (déphasage de $\pi/2$) grâce aux propriétés du coupleur trois voies.

Dans cette structure la+Ic et la-Ic sont toujours déphasés de $\pi/2$, alors que dans les dispositifs à trous d'Young le déphasage est de $\pi/2 \pm\delta\phi$ suivant les erreurs technologiques, est inférieur à 10° dans la plupart des cas.

B/ Pour détecter des variations d'absorption :

Dans ce cas il n'est nul besoin de faire interférer les guides 11 et 12 ; il est suffisant de détecter les intensités lumineuses Is1 et Is2 en sortie de ces deux guides. Le composant 16 permet de relier les guides 11 et 12 à deux détecteurs 17.

Dans les deux cas considérés ci-dessus (A et B) l'entrelacement des deux guides 11 et 12 doit assurer une influence des paramètres extérieurs parasites la plus identique possible sur chacun d'eux. Seule l'influence du paramètre à mesurer doit conduire à une évolution différente des intensités de sortie.

Le second guide peut être réalisé de plusieurs façons permettant soit :

1/ Un contact direct de l'onde guidée et de la substance à mesurer (via en général l'onde évanescente)

Pour les gaz, d'indices très voisins de celui de l'air, cette méthode peut être utilisée. Elle a l'inconvénient de n'être pas sélective si plusieurs gaz sont en présence simultanément et si on mesure les variations de phase (montage interférométrique) induites.

Cette méthode peut devenir sélective si on mesure des variations d'absorption, à condition d'utiliser une longueur d'onde de travail qui correspond à une raie d'absorption propre du gaz à mesurer. Il faut bien sûr que le guide de référence soit transparent pour cette longueur d'onde et qu'il existe une source capable de la générer.

Dans tous les cas, on supprime la couche d'isolation de ce guide 12, partiellement ou complètement, et on utilise l'interaction entre les ondes évanescentes du mode guidé et le milieu environnant.

2/ Un contact indirect de l'onde guidée et de la substance à mesurer :

Le contact a lieu alors par l'intermédiaire d'un matériau diélectrique transparent à la longueur d'onde de travail et sensible, c'est-à-dire capable d'absorber ou d'adsorber le gaz (ou éventuellement le liquide) à mesurer. Cette absorption ou adsorption modifie soit l'indice du matériau diélectrique sensible, soit son absorption, soit les deux à la fois.

Ces modifications se traduisent par une modification de la phase ou de l'absorption (ou des deux) de l'onde guidée. Le matériau diélectrique doit être donc déposé de telle façon que l'onde guidée puisse être en contact avec lui.

Les deux guides 11 et 12 de la spirale 10 peuvent par exemple être réalisés avec des structures de type

OIS1 : Si/SiO$_2$/Si$_3$N$_4$/SiO$_2$

ou

OIS2 : Si/SiO$_2$/SiO$_2$ haut indice/SiO$_2$

Pour réaliser le premier guide 11 du capteur de l'invention isolé de l'influence de la substance à mesurer, l'isolation de guides de type OIS1 et OIS2 est assez simple :

- pour un guide 11 de type OIS1, comme représenté sur la figure 3, le diélectrique 20 déposé sur le guide est choisi pour isoler le guide défini par le plot de silice sur nitrure de silicium. Il doit avoir

  . un indice $n_o < n_{SiO_2}$,
  . une épaisseur telle que l'onde évanescente associée au mode guidé ne puisse voir l'environnement,
  . une imperméabilité bonne vis-à-vis des agents extérieurs, et en particulier bien sûr de la substance à détecter.

Ce diélectrique 20 peut donc être différent suivant la substance à détecter. En pratique des gels de silice convenablement recuits ou des colles optiques conviennent pour assurer cette isolation.

- pour un guide 11 de type OIS2, comme représenté sur la figure 4, le recouvrement d'une telle structure assure son isolation vis-à-vis du milieu extérieur si la couche de silice $SiO_2$ supérieure est suffisamment épaisse, c'est-à-dire supérieure à la pénétration des ondes évanescentes associées au mode guidé.

Pour réaliser le second guide 12 du capteur de l'invention, affecté par la substance à mesurer, plusieurs configurations sont réalisables :

1/ Par contact direct de l'onde guidée et de la substance à mesurer :

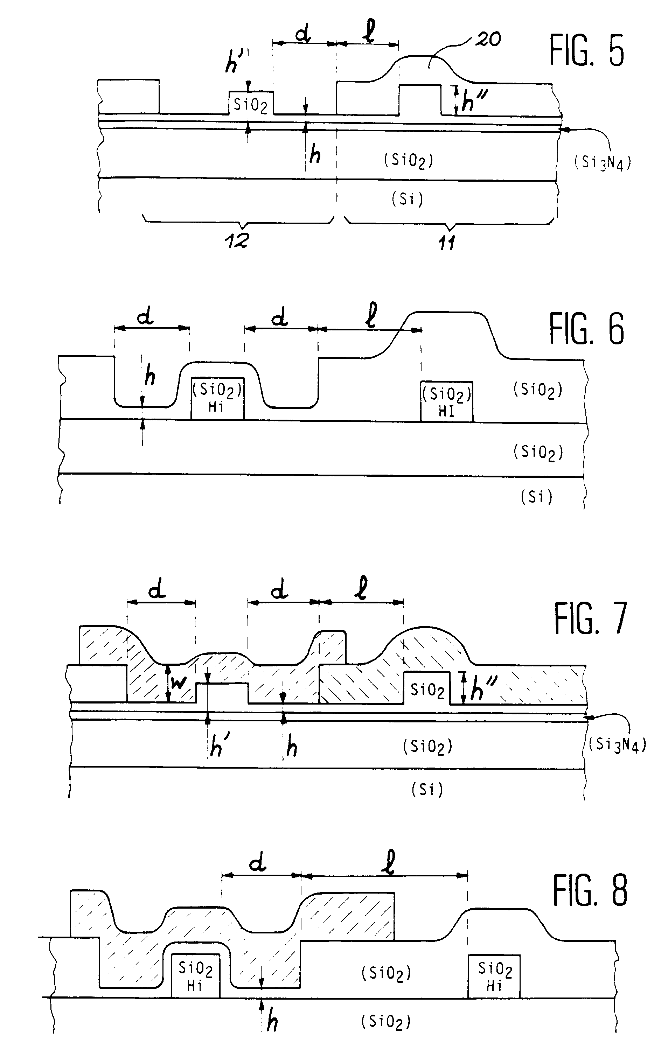

- pour un guide 12 de type OIS1, comme représenté dans la partie gauche de la figure 5, la largeur d de part et d'autre du guide de mesure définie par le plot de silice $SiO_2$ doit être calculée pour éviter tout couplage entre le plot du guide 12 et la partie planaire adjacente surmontée ou non d'un diélectrique. En pratique la distance d est supérieure ou égale à une valeur de l'ordre de quelques microns.

Cette figure 5, comme les figures 6 à 14 est une coupe transversale de deux guides voisins 11 et 12 de la spirale 10, le guide de mesure 12 étant représenté dans la partie gauche de la figure.

Il faut d'autre part que l'onde évanescente du mode guidé "voit" le fluide à mesurer, donc que la hauteur h ou h' soit inférieure à la profondeur de pénétration p de cette onde évanescente dans la couche supérieure de silice.

On a bien sûr h<h' de façon à assurer le confinement latéral du mode guidé.

. si h'>p, h<p, le contact se fait par les côtés uniquement et non par le dessus du guide,
. si h'<p => h<p le contact se fait par les côtés et le dessus. La sensibilité peut être meilleure pour une longueur de spirale 10 donnée, h pouvant être nulle dans les deux cas.

Dans cette représentation de la figure 5, de deux guides voisins 11 et 12 de la spirale en coupe transversale, la distance l est calculée pour que la protection du guide de référence 11 soit totale. La distance d est telle que tout couplage entre les guides de mesure et de référence soit interdit.

L'épaisseur h" de silice $SiO_2$ du guide de référence 11 est en général supérieure à p (profondeur de pénétration de l'onde évanescente), h" peut donc être différente de h'.

- pour un guide 12 de type OIS2, comme représenté sur la partie gauche de la figure 6, la couche de recouvrement en silice $SiO_2$ a une épaisseur h<p et éventuellement nulle, "$SiO_2$ HI" signifiant $SiO_2$ haut indice. Le contact a alors lieu par les côtés et les dessus du guide.

Des configurations intermédiaires peuvent être réalisées.

Dans cette représentation de la figure 6 la distance d est calculée pour que tout couplage entre les deux guides de mesure et de référence soit impossible.

La distance l est calculée pour que le guide de référence soit parfaitement isolé de l'environnement.

La hauteur h est suffisamment faible pour assurer l'interaction entre l'onde guidée et le milieu environnant à analyser ; h peut être nulle.

2/ Pour un contact indirect de l'onde guidée et de la substance à mesurer, les configurations suivantes sont alors réalisables :

a) si l'indice réel du diélectrique sensible $n_{DS}$ est inférieur à l'indice du $SiO_2$ $n_{SiO_2}$ : $n_{DS} < n_{SiO_2}$.

C'est le cas pour de nombreux polymères : par exemple, le polyoxyéthylène lauryl éther "POELE" a été déjà utilisé (pour une détection de méthane ($CH_4$)) dans des configurations de capteurs tout à fait différentes : son indice $n_{DS}$ est un peu inférieur à celui de la silice $SiO_2$ : ($n_{DS} \sim 1,4512$).

- Pour un guide 12 de type OIS1, comme représenté sur la partie gauche de la figure 7, l'épaisseur w du diélectrique sensible peut être quelconque pourvu que l'absorption du fluide puisse atteindre la zone d'intéraction avec l'onde guidée.

En pratique w est compris entre une fraction de micromètre et quelques micromètres.

Les conditions concernant les hauteurs h et h' et les distances l et d sont identiques à celles données précédemment dans le cas d'un contact direct de l'onde guidée et de la substance à mesurer.

- Dans un guide 12 de type OIS2, comme représenté sur la partie gauche de la figure 8, les remarques faites dans le cas d'un contact direct de l'onde guidée et de la substance à mesurer restent valables. L'épaisseur w du diélectrique sensible obéit aux mêmes contraintes que pour le guide de type OIS1.

b) Si l'indice du diélectrique sensible $n_{DS}$ est supérieur à $n_{SiO_2}$ : $n_{DS} > n_{SiO_2\text{-HI}}$ ; on peut prendre ici comme référence l'indice du $SiO_2$-HI le plus grand que l'on puisse obtenir avec les dopants usuels : bore, phosphore, azote, germanium ou titane.

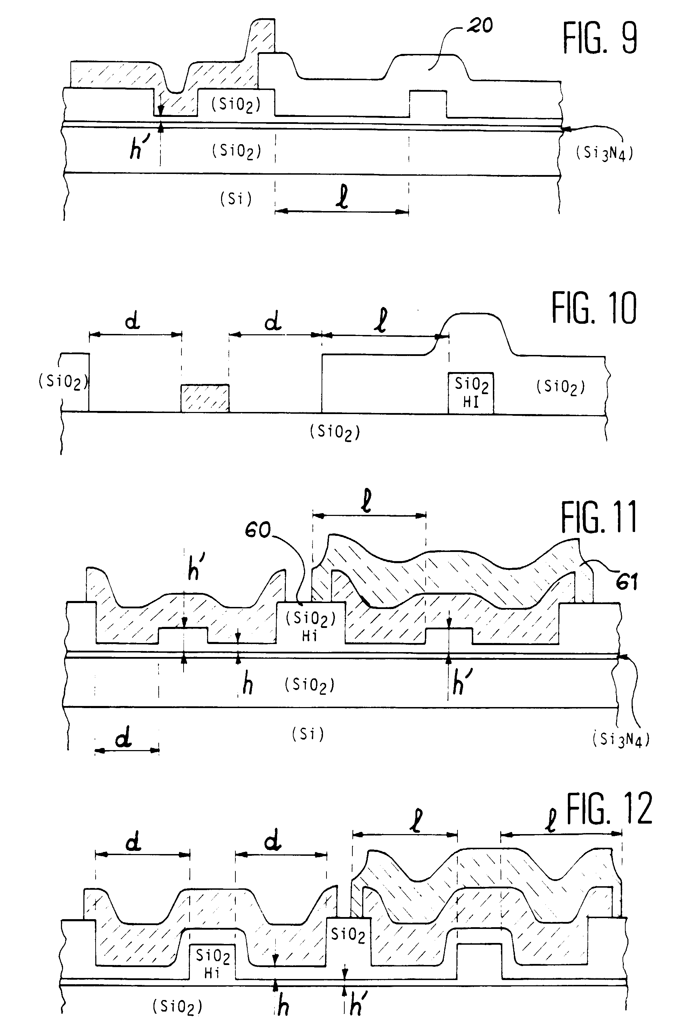

- Pour un guide de type OIS1, comme représenté sur la partie gauche de la figure 9, ce guide de mesure 12 est réalisé par un confinement latéral de lumière obtenu à l'aide du diélectrique sensible.

  L'épaisseur restante de silice $SiO_2$ h' doit être inférieure à p, pénétration de l'onde évanescente du mode guidé.

- pour un guide 12, la structure OIS2 ne convient pas dans ce cas, si on veut garder le coeur du microguide en $SiO_2$-HI. Il est toutefois possible de réaliser le coeur de ce guide 12 avec le diélectrique sensible si celui-ci est suffisamment transparent. Mais cela suppose que la technologie associée à ce diélectrique sensible soit suffisamment développée, ce qui est rarement le cas. La figure 10 donne une représentation de deux guides voisins 11 et 12 de la spirale en coupe transversale, dans le cas où le diélectrique sensible est technologiquement utilisable : par exemple gravé. Le polymère sensible joue ici à la fois le rôle du coeur et celui du diélectrique sensible.

Dans les parties d'entrée et de sortie de la spirale 10 hors de la zone spiralée, les deux guides de mesure 12 et de référence 11 retrouvent une structure identique du type du guide de référence (OIS1 ou OIS2). Les liaisons d'entrée et de sortie du guide de mesure avec la partie centrale de ce guide utilisée pour la mesure peuvent se faire par couplage direct si les structures des deux guides sont très voisines ($n_{DS}$ voisin de l'indice de la silice) ou par transitions adiabatiques (si $n_{DS}$ est très différent de $n_{SiO_2}$ dans le cas où on utilise une structure OIS2). Ces zones de transitions adiabatiques peuvent être réalisées comme décrites dans le document "Applied Physical Letters" 55 (23) du 4 décembre 1989; pages 2389-2391 de Y. Shani et al. intitulé "Efficient coupling of a semiconductor laser to an optical fiber by means of a tapered waveguide on silicon".

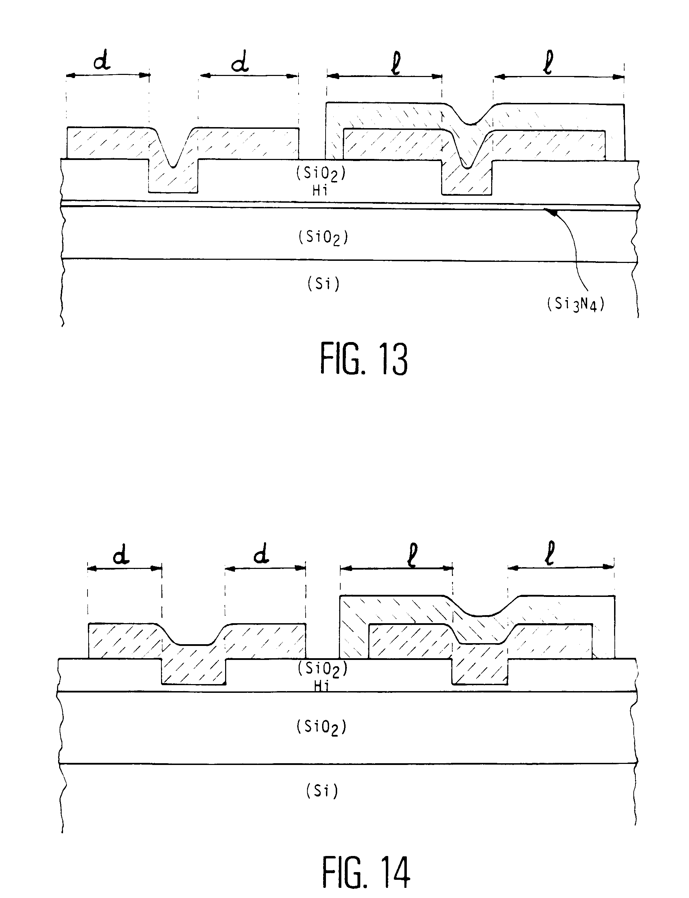

Dans le cas d'un contact indirect entre l'onde guidée et la substance à mesurer, des variantes de réalisation sont représentées sur les figures 11 à 14, relativement à des structures OIS1 (figures 11 et 13) et OIS2 (figures 12 et 14) respectivement pour $n_{DS} < n_{SiO_2\text{-HI}}$ et $n_{DS} > n_{SiO_2\text{-HI}}$. Ces variantes de réalisation sont intéressantes car elles ont l'avantage de mieux symétriser l'empilement des couches entre le guide de référence 11 et le guide de mesure 12 dans le cas où un matériau sensible est utilisé, et donc de mieux supprimer les effets parasites.

Sur ces figures 11 à 14, la distance I est calculée de telle façon qu'il n'y ait plus d'intéraction entre la lumière guidée qui se propage sous les différents guides et les milieux de recouvrement pour cette distance.

Sur les figures 11 et 12 il apparaît un plot 60 en silice $SiO_2$-HI ou $SiO_2$ dont la largeur dépend des valeurs choisies pour d et I et de la distance séparant les coeurs des guides 11 et 12. La largeur de ce plot peut être nulle.

Le diélectrique de protection 61 des guides doit pouvoir être déposé à basse température car il va recouvrir le matériau sensible dont la tenue en température est souvent faible. C'est bien sûr une limitation dans la gamme des matériaux de protection qui peuvent être mis en oeuvre, mais il existe des possibilités assez nombreuses : polymères divers, dépôt de silice $SiO_2$ ou autre par évaporation ou pulvérisation cathodique. La qualité optique de la couche de protection n'est toutefois pas importante.

Bien entendu, les exemples donnés ne doivent pas être considérés comme limitatifs quant à la nature des composantes de la structure guidée et celle-ci peut être constituée pratiquement de tous les matériaux utilisés de façon classique en optique intégrée, et notamment le verre dont on fait varier l'indice par échange d'ions, ou des structures en semiconducteur ou en niobate de lithium.

L'invention permet la mesure des caractéristiques de gaz dont les indices de réfraction sont toujours voisins de 1 et donc inférieurs à l'indice de la silice et de liquides à condition que l'indice du liquide $n_L$ soit tel qu'il ne détruise pas le confinement de l'onde lumineuse donc : $n_L < n_{SiO_2\text{-HI}}$.

Pour les liquides, la mesure ne consiste en général pas à mettre en évidence la présence du liquide dans l'environnement du capteur (des capteurs beaucoup plus simples sont alors réalisables) mais la modification de l'indice d'un liquide dans lequel le capteur est immergé, par exemple la modification d'indice liée à la variation de pH (concentration en H$^+$) ou à toute autre concentration de soluté en quantité très faible.

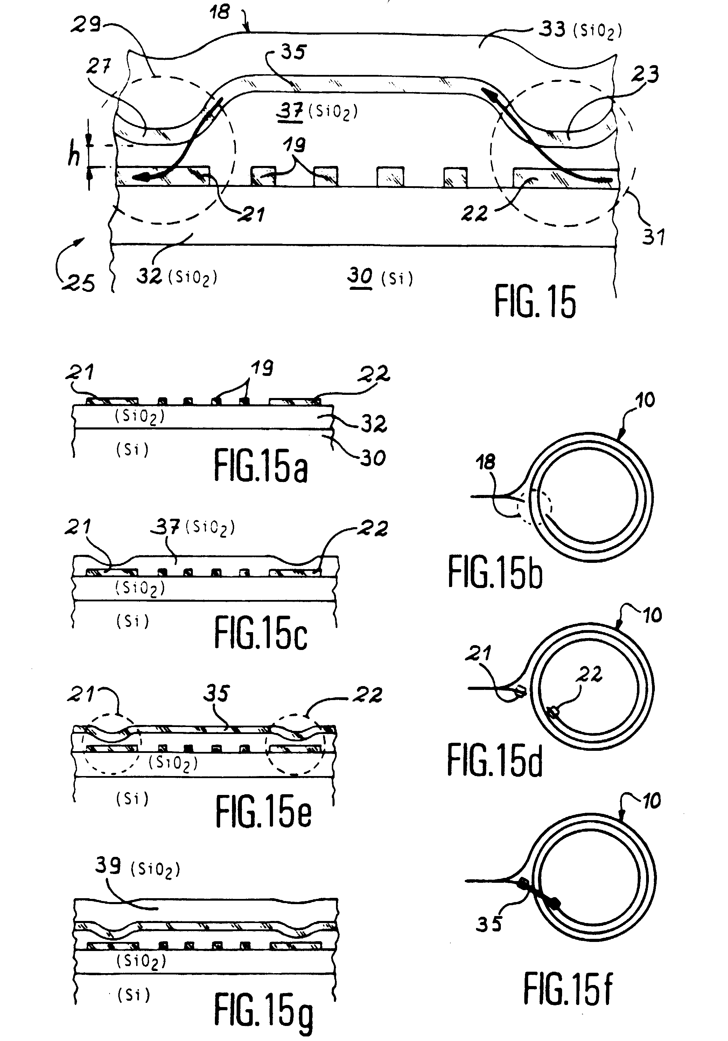

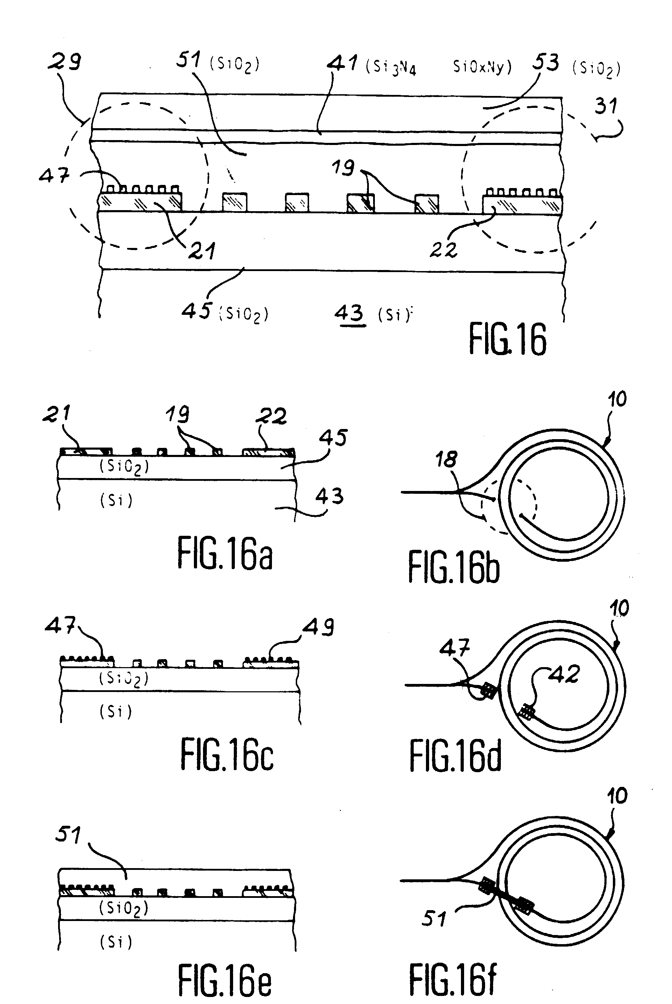

Les figures 15 et 16 permettent de décrire des modes de réalisation possibles du passage 18 des figures 1 et 2. Dans ces figures 15 et 16, les passages décrits sont des franchissements supérieurs à la manière de ponts. Mais il doit être bien entendu que ceci n'est pas limitatif et que des solutions qui consisteraient à utiliser des passages inférieurs seraient tout aussi bien performantes.

Pour simplifier la description, un seul croisement est décrit ci-dessus, étant bien entendu que chaque guide de la spirale est associé à un croisement.

Dans le cas de la figure 15, on superpose dans la zone de passage 18 deux structures guidantes identiques l'une au-dessus de l'autre pour réaliser le pont de franchissement souhaité. La structure guidante utilisée dans cet exemple décrit est une structure du type Si/$SiO_2$/$SiO_2$ haut indice/$SiO_2$, mais pourrait tout aussi bien être une structure différente.

Dans le cas de la figure 15, la structure de base comporte la couche de silicium 30 surmontée d'une couche de silice 32 et de différents plots 19 de guides en silice $SiO_2$ dopée. Parmi ceux-ci on trouve les plots des guides 11 et 12 de la spirale 10 proprement dite et les deux pavés inférieurs 21 et 22 des coupleurs 29 et 31 de cette première structure avec la structure supérieure qui la surmonte. Cette structure supérieure comporte une couche en silice 33, un coeur de guide d'ondes proprement dit en silice dopée 35 ; quant à la couche 37, commune aux deux structures, elle est réalisée en silice. On voit sur cette figure 15 le coupleur 29 constitué par le pavé 21 et la partie immédiatement au-dessus 27 du coeur du guide 35 et le coupleur 31 situé sur l'autre bord de la spirale et constitué du pavé 22 et de la partie surbaissée 23 du coeur du guide 35. Les flèches en traits continus symbolisent la façon dont la lumière passe dans le coupleur 31 du pavé 22 au coeur du guide 35 et dans le coupleur 29 du coeur du guide 35 dans le pavé 21. Ce mode de mise en oeuvre permet ainsi le franchissement de la zone 18 sans qu'il en résulte aucune gêne pour la propagation de la lumière dans les guides de la spirale 10.

Sur les figures 15a à 16g on a représenté à titre explicatif les principales étapes du procédé de préparation du pont de franchissement de la figure 15. Sur un substrat de silicium revêtu de silice, on commence par déposer, comme représenté sur la figure 15, les pavés 21 et 22 des coupleurs futurs ainsi que les plots des guides en spirale 19 de la spirale 10. Le système à ce stade a l'allure représentée vue de dessus sur la figure 15b.

L'étape suivante (figure 15c) consiste à déposer par dépôt chimique en phase vapeur assisté par un plasma, suivi d'une gravure chimique, la couche intermédiaire 37 de silice. Cette couche comporte au-dessus des pavés 21 et 22 des échancrures dans lesquelles vient se loger ultérieurement le conduit de lumière 35 lui-même. La vue de dessus correspondant à l'état de cette figure 15 est représentée sur la figure 15d.

La phase suivante (figure 15e) consiste à déposer sur la structure précédente le coeur de la structure guide 35 et à graver ce coeur au travers d'un masque (pour assurer le confinement latérale de la lumière). La matière du coeur 35 est la silice dopée. La vue de dessus du même dispositif dans cet état est représentée par la figure 15f.

L'étape suivante consiste dans le dépôt de la couche finale ou superstrat 39 comme on le voit sur la figure 15g. Ce dépôt qui est fait en silice $SiO_2$ peut être également réalisé par dépôt chimique en phase vapeur assisté par un plasma.

Comme l'homme de métier le sait, les épaisseurs données aux différentes couches dépendent des indices effectifs désirés pour chacune de celles-ci et de la nécessité d'obtenir un passage correct de l'onde évanescente au niveau des coupleurs 29 et 31.

En se référant maintenant à la figure 16, on va décrire un autre mode de réalisation de la zone de franchissement dans le cas où celle-ci est obtenue à l'aide de deux structures superposées non identiques. Dans un cas de ce genre, le couplage entre la structure inférieure et la structure supérieure est en général très faible puisque les vitesses des ondes lumineuses guidées dans chaque structure sont différentes. Pour que le passage de lumière ait néanmoins lieu entre ces deux structures, il faut constituer les coupleurs d'un réseau de pas p tel que :

$$\beta_1 + 2\,\pi m/\rho = \beta_2$$

avec

$$\beta_1 = (2\,\pi n_1)/\lambda o \text{ et } \beta_2 = (2\,\pi n_2)/\lambda o$$

$\beta_1$ et $\beta_2$ étant les constantes de propagation des modes des structures des deux guides supérieur et inférieur, p le pas du réseau, m l'ordre de diffraction, et $n_1$ et $n_2$ les indices effectifs des coeurs 19 et 41 des guides supérieur et inférieur. Si l'on tient compte des conditions précédentes, le couplage entre les structures supérieure et inférieure est excellent et permet la réalisation du franchissement de la zone 25. Dans l'exemple de la figure 16, la structure inférieure est du type $Si/SiO_2/SiO_2$ dopée/$SiO_2$ et celle du guide supérieur est du type $Si/SiO_2/Si_3N_4$ (ou $SiO_xN_y$)/$SiO_2$. C'est ce que l'on voit sur la figure 16 où le substrat inférieur 43 est en silicium et surmonté d'une première couche en silice 45. A la surface de cette couche 45 sont situés les plots 19 des guides de la spirale 10 en silice dopée ainsi que les plots 21 et 22, également en silice dopée, de support des réseaux 47 et 49.

La couche de silice 51 qui surmonte les plots des guides 19 et les plots 21 et 22 des coupleurs 29 et 31 est commune à la structure inférieure et à la structure supérieure. Cette dernière comprend le coeur du guide proprement dit 41 en nitrure de silicium $Si_3N_4$ ou en un composé du type $SiO_xN_y$ et est surmontée de la couche de silice 53. Les réseaux 47 et 49 assurent le couplage lumineux entre les deux structures précédentes. La structure de la figure 16 est technologiquement viable si l'on respecte, pour les constantes $\beta_1$ et $\beta_2$ les conditions précédemment énoncées, c'est-à-dire, en particulier, si les épaisseurs et les indices des différents guides sont convenables et cohérents avec le pas p des réseaux 47 et 49.

Bien que l'homme de métier sache réaliser les structures guidantes de la figure 16, on a représenté schématiquement sur les figures 16a à 16f les principales étapes de réalisation de cette structure.

Sur la figure 16a, on a représenté le substrat 43 en silicium surmonté de la couche de silice 45 sur laquelle on vient graver les plots 19, 21, 22 de façon connue. La structure parvenue à ce stade est représentée en vue de dessus sur la figure 16b.

L'étape suivante consiste en la réalisation des réseaux 47 et 49 par dépôt puis gravure à travers un masque d'une couche de diélectrique d'indice différent de celui de la couche 51. La figure 16d représente l'état de cette même structure vue de dessus avec les réseaux 47, 49 situés de part et d'autre des conduits de la spirale 10.

La figure 16e montre le dépôt par voie chimique en phase vapeur de la couche intermédiaire de silice 51 commune aux deux structures. L'état du dispositif est alors visible de dessus sur la figure 16f ; il suffit de le compléter par le dépôt du coeur 41 des guides suivi d'une gravure et d'un dépôt du superstrat de silice $SiO_2$. Comme dans l'exemple de la figure 15, les épaisseurs de chacun des dépôts sont choisies par l'homme de métier en fonction des indices effectifs désirés pour chaque couche.

Le capteur selon l'invention tel que décrit ci-dessus trouve des applications pour les mesures chimiques en général :

- détection de gaz,
- mesure de concentration de liquide (pH, concentration de soluté...),
- mesure de concentration d'antigènes après greffage d'anticorps par l'intermédiaire d'un diélectrique sensible : la seule différence est que dans ce cas l'épaisseur du diélectrique sensible est très faible (quelques dizaines de nm). Le principe du greffage est connu en particulier sur la silice.

## Revendications

1. Capteur en optique intégrée, notamment pour substances chimiques, comprenant deux guides d'ondes (11, 12) intégrées sur un substrat (13), recevant le signal d'une source de lumière (14) au travers d'un premier composant optique (15) permettant de séparer en deux parties l'intensité lumineuse émise par la source (14), et envoyant des signaux de sortie sur au moins un détecteur (17) le premier des deux guides (11) étant un guide de référence isolé de l'influence de la substance à mesurer, et le second (12) étant un guide de mesure affecté par la substance à mesurer, caractérisé en ce que les guides d'onde (11, 12) forment une double spirale (10) entrelacée et en ce que les signaux de sortie sont envoyés sur le(s) détecteur(s) (17) au travers d'un second composant optique (16).

2. Capteur selon la revendication 1, caractérisé en ce que les entrées et les sorties de la spirale (10) sont situées sur le même côté du substrat.

3. Capteur selon la revendication 1, caractérisé en ce que le second guide (12) est affecté par la substance à mesurer soit directement, soit par l'intermédiaire d'un matériau relais.

4. Capteur selon l'une quelconque des revendications précédentes, caractérisé en ce qu'il est utilisé pour réaliser :

- soit une mesure directe d'intensité (mesure d'absorption sélective),
- soit une mesure interférométrique (mesure d'indice réel) avec ou non mesure simultanée d'absorption.

5. Capteur selon la revendication 4, caractérisé en ce que le second composant optique (16) est un bicoupleur ou préférentiellement un tricoupleur permettant de faire interférer les signaux de sortie des guides (11, 12), de manière à mesurer les variations de phases induites entre le premier guide (11) de référence et le second guide (12) de mesure.

6. Capteur selon la revendication 5, caractérisé en ce que ce second composant optique (16), qui est un bicoupleur ou préférentiellement un tricoupleur, comprend un guide central (2) associé aux guides de mesure et de référence et disposé entre les guides (11, 12).

7. Capteur selon la revendication 4, caractérisé en ce que le second composant optique (16) permet de relier les deux guides (11, 12) et deux détecteurs (17) pour détecter les intensités lumineuses en sortie de ces guides (11, 12).

8. Capteur selon la revendication 1, caractérisé en ce que dans les parties d'entrée et de sortie de la spirale (10) les deux guides (11, 12) ont une structure identique à celle du guide de référence (11).

9. Capteur selon la revendication 8, caractérisé en ce qu'en dehors des parties d'entrée et de sortie de la spirale le guide de mesure a une structure différente pour permettre la mesure ; les liaisons entre les parties d'entrée et de sortie du guide et la partie centrale de mesure se faisant par une transition adiabatique.

10. Capteur selon la revendication 1, caractérisé en ce que le franchissement (18) des guides (11, 12) de la spirale (10) par l'une des deux extrémités de ceux-ci est réalisé par croisement direct des guides dans le plan de la spirale (10) elle-même, les angles de croisement des différents guides étant, de préférence, supérieurs à 10°.

11. Capteur selon la revendication 1, caractérisé en ce que le franchissement des spires de la boucle (10) par l'une des deux extrémités des guides de la spirale est réalisé sous forme d'un passage supérieur (ou inférieur) à la façon d'un pont, par superposition de deux structures guidantes croisées dont la structure inférieure, constituée par la spirale elle-même, est couplée optiquement à la structure supérieure de franchissement par l'intermédiaire de deux coupleurs situés sur l'extrémité d'entrée (ou de sortie) respectivement de part et d'autre des guides d'ondes de la spirale.

12. Capteur selon l'une quelconque des revendications précédentes, caractérisé en ce que les guides d'ondes lumineuses sont réalisés dans l'une des structures $Si/SiO_2/Si_3N_4/SiO_2$ (OIS1), et $Si/SiO_2/SiO_2$ haut indice/$SiO_2$ (OIS2).

**Patentansprüche**

1. Integrierter optischer Sensor, insbesondere für chemische Substanzen, zwei auf einem Substrat (13) integrierte Wellenleiter (11, 12) umfassend, die das Signal einer Lichtquelle (14) durch ein erstes optisches Bauteil (15) empfangen, das ermöglicht, die durch die Quelle (14) abgestrahlte Lichtintensität in zwei Teile zu teilen, und die Ausgangssignale zu wenigstens einem Detektor (17) leiten, wobei der erste (11) der beiden Leiter ein von der zu messenden Substanz isolierter Bezugsleiter ist, und der zweite (12) ein Meßleiter ist, auf den die zu messende Substanz einwirkt,
**dadurch gekennzeichnet,**
daß die Wellenleiter (11, 12) eine verschlungene Doppelspirale (10) bilden, und dadurch, daß die Ausgangssignale durch ein zweites optisches Bauteil (16) zu dem (den) Detektor(en) geleitet werden.

2. Sensor nach Anspruch 1, dadurch gekennzeichnet, daß die Eingänge und die Ausgänge der Spirale (10) sich auf derselben Seite des Substrats befinden.

3. Sensor nach Anspruch 1, dadurch gekennzeichnet, daß die zu messende Substanz auf den zweiten Leiter (12) entweder direkt oder über ein Relaismaterial bzw. Zwischenmaterial einwirkt.

4. Sensor nach einem der vorangehenden Ansprüche, dadurch gekennzeichnet, daß er benutzt wird zur Durchführung von:

- entweder einer direkten Intensitätsmessung (selektive Absorptionsmessung),
- oder einer interferometrischen Messung (Messung des tatsächlichen Index) mit oder ohne gleichzeitiger Absorptionsmessung.

5. Sensor nach Anspruch 4, dadurch gekennzeichnet, daß das zweite optische Bauteil (16) ein Bikoppler oder vorzugsweise ein Trikoppler ist, der ermöglicht, die Ausgangssignale der Leiter (11, 12) interferieren zu lassen, um die zwischen dem Bezugsleiter (11) und dem Meßleiter (12) induzierten Phasenänderungen zu messen.

6. Sensor nach Anspruch 5, dadurch gekennzeichnet, daß das zweite optische Bauteil (16), das ein Bikoppler oder vorzugsweise ein Trikoppler ist, einen zentralen Leiter (2) umfaßt, dem Meß- und dem Bezugsleiter zugeordneten und zwischen diesen Leitern (11, 12) angeordnet.

7. Sensor nach Anspruch 4, dadurch gekennzeichnet, daß das zweite optische Bauteil (16) ermöglicht, die beiden Leiter (11, 12) und zwei Detektoren (17) zu verbinden, um die Lichtintensitäten am Ausgang dieser Leiter (11, 12) zu detektieren.

8. Sensor nach Anspruch 1, dadurch gekennzeichnet, daß im Eingangs- und Ausgangsteil der Spirale (10) die beiden Leiter (11, 12) eine Struktur haben, die identisch ist mit der des Bezugsleiters (11).

9. Sensor nach Anspruch 8, dadurch gekennzeichnet, daß außerhalb des Eingangs- und Ausgangsteils der Spirale der Meßleiter eine andere Struktur aufweist, um die Messung zu ermöglichen, wobei die Verbindungen zwischen dem Eingangs- und dem Ausgangsteil des Leiters und dem zentralen Meßteil durch einen adiabatischen Übergang erfolgen.

10. Sensor nach Anspruch 1, dadurch gekennzeichnet, daß das Überwinden bzw. Queren (18) der Leiter (11, 12) der Spirale (10) durch eines ihrer beiden Enden durch direktes Kreuzen der Leiter in der Ebene der Spirale (10) selbst erfolgt, wobei die Kreuzungswinkel der verschiedenen Leiter vorzugsweise größer als 10° sind.

11. Sensor nach Anspruch 1, dadurch gekennzeichnet, daß das Überwinden der Windungen der Schleifenleitung (10) durch eines der beiden Enden der Spirale mittels einer Überführung (oder Unterführung) nach Art einer Brücke durch Überlagerung von zwei sich überkreuzenden leitenden Strukturen erfolgt, von denen die untere, gebildet durch die Spirale selbst, mit der oberen Querungsstruktur optisch gekoppelt ist durch zwei Koppler, die sich jeweils an dem Eingangsende (oder Ausgangsende) zu beiden Seiten der Wellenleiter der Spirale befinden.

12. Sensor nach einem der vorangehenden Ansprüche, dadurch gekennzeichnet, daß die Lichtwellenleiter hergestellt werden in einer der Strukturen $Si/SiO_2/Si_3N_4/SiO_2$ (OIS1) und $Si/SiO_2/SiO_2$ hoher

Brechzahl/$SiO_2$ (OIS2).

## Claims

1. Integrated optical sensor, particularly for chemical substances comprising two wave guides (11, 12) integrated onto a substrate (13), receiving the signal from a light source (14) across a first optical component (15) permitting the subdivision into two parts of the light intensity emitted by the source (14) and supplying output signals to at least one detector (17), the first of the two guides (11) being a reference guide isolated from the influence of the substance to be measured and the second (12) being a measurement guide affected by the substance to be measured, characterized in that the wave guides (11, 12) form a double interlaced spiral (10) and in that the output signals are supplied to the detector or detectors (17) across a second optical component (16).

2. Sensor according to claim 1, characterized in that the inlets and outlets of the spiral (10) are situated on the same side of the substrate.

3. Sensor according to claim 1, characterized in that the second guide (12) is affected by the substance to be measured either directly or by means of a relay material.

4. Sensor according to any one of the preceding claims, characterized in that it is used to carry out:

   - either a direct measurement of intensity (selective absorption measurement),
   - or an interferometric measurement (real index measurement) possibly with a simultaneous absorption measurement.

5. Sensor according to claim 4, characterized in that the second optical component (16) is a bicoupler or preferably a tricoupler able to interfere with the outgoing signals of the guides (11, 12) so as to measure the phase variations induced between the first reference guide (11) and the second measuring guide (12).

6. Sensor according to claim 5, characterized in that the second optical component (16), which is a bicoupler or preferably a tricoupler, includes a central guide (2) associated with the reference and measuring guides and disposed between the guides (11, 12).

7. Sensor according to claim 4, characterized in that the second optical component (16) is able to connect the two guides (11, 12) and two detectors (17) for detecting the luminous intensities at the outlet of these guides (11, 12).

8. Sensor according to claim 1, characterized in that in the inlet and outlet portions of the spiral (10), the two guides (11, 12) have a structure identical to that of the reference guide (11).

9. Sensor according to claim 8, characterized in that outside the inlet and outlet portions of the spiral, the measuring guide has a different structure allowing for measurement, the links between the inlet and outlet portions of the guide and the central measuring portion being effected by an adiabatic transition.

10. Sensor according to claim 1, characterized in that the crossing (18) of the guides (11, 12) of the spiral (10) by one of the two extremities of the latter is embodied via the direct crossing of the guides within the plane of the spiral (10) itself, the crossing angles of the various guides preferably being greater than 10 degrees.

11. Sensor according to claim 1, characterized in that the crossing of the spires of the loop (10) by one of the two extremities of the guides of the spiral is embodied in the form of one upper (or lower) passage in the manner of a bridge by superimposing two crossed guiding structures, the lower structure constituted by the spiral itself being coupled optically to the upper crossing structure by means of two couplers situated on the incoming (or outgoing) extremity respectively on both sides of the wave guides of the spiral.

12. Sensor according to any one of the preceding claims, characterized in that the luminous wave guides are embodied in one of the $Si/SiO_2/Si_3N_4/SiO_2$ (OIS1) and $Si/SiO_2$ high index $SiO_2/SiO_2$ (OIS2) structures.

FIG. 1

FIG. 2

FIG. 3

FIG. 4

FIG. 5

FIG. 6

FIG. 7

FIG. 8

FIG. 9

$(SiO_2)$

$(SiO_2)$

$h'$

$(Si_3N_4)$

$(Si)$

$\ell$

FIG. 10

$d$

$d$

$\ell$

$(SiO_2)$

$SiO_2$
HI

$(SiO_2)$

$(SiO_2)$

FIG. 11

$\ell$

60

$h'$

61

$(SiO_2)$
Hi

$h$ $(SiO_2)$

$h'$

$d$

$(Si)$

$(Si_3N_4)$

FIG. 12

$\ell$

$\ell$

$d$

$d$

$SiO_2$
Hi

$SiO_2$

$(SiO_2)$

$h$

$h'$

$d$   $d$   $l$   $l$

$(SiO_2)$
Hi

$(SiO_2)$

$(Si)$

$(Si_3N_4)$

FIG. 13

$d$   $d$   $l$   $l$

$(SiO_2)$
Hi

$(SiO_2)$

$(Si)$

FIG. 14

FIG. 15

FIG.15a

FIG.15c

FIG.15e

FIG.15g

FIG.15b

FIG.15d

FIG.15f

29   51 (SiO₂)   41 (Si₃N₄   SiOxNy)   53 (SiO₂)

31

47

19

21   22

45 (SiO₂)   43 (Si)

FIG.16

21   19   22

45

(SiO₂)

(Si)   43

FIG.16a

10

18

FIG.16b

47   49

(SiO₂)

(Si)

FIG.16c

10

47

42

FIG.16d

51

(SiO₂)

(Si)

FIG.16e

10

51

FIG.16f